(19) Europäisches Patentamt
European Patent Office
Office européen des brevets

(11) EP 4 786 563 A1

(12) **EUROPEAN PATENT APPLICATION**
published in accordance with Art. 153(4) EPC

(43) Date of publication:
**05.08.2026 Bulletin 2026/32**

(21) Application number: **24871575.7**

(22) Date of filing: **19.08.2024**

(51) International Patent Classification (IPC):
***C09K 23/38*** *(2022.01)* ***C09D 7/63*** *(2018.01)*
***C09D 11/02*** *(2014.01)* ***C09D 201/00*** *(2006.01)*
***C09K 23/42*** *(2022.01)* ***D21H 19/20*** *(2006.01)*

(52) Cooperative Patent Classification (CPC):
**C08K 5/053; C08K 5/06; C08L 71/02; C09D 7/63; C09D 11/00; C09D 11/02; C09D 201/00; C09K 23/38; C09K 23/42; D21H 19/10; D21H 19/20; D21H 19/46; D21H 21/24**

(86) International application number:
**PCT/JP2024/029303**

(87) International publication number:
**WO 2025/069773 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.09.2023 JP 2023166798**

(71) Applicant: **Nissin Chemical Industry Co., Ltd.**
**Fukui 915-0802 (JP)**

(72) Inventors:
- **KOBAYASHI Fumika**
  **Echizen-shi, Fukui 915-0802 (JP)**
- **NISHIKAWA Tomoyuki**
  **Echizen-shi, Fukui 915-0802 (JP)**

(74) Representative: **V.O.**
**P.O. Box 87930**
**2508 DH Den Haag (NL)**

(54) **BIOMASS WATER-SOLUBLE SURFACTANT COMPOSITION, INK, AND PAPER COATING AGENT**

(57) [Object] One of the objects of the present invention is to provide a biomass water-soluble surfactant composition which has excellent solubility in water, exhibits excellent antifoaming properties and dispersibility, and further has low dynamic surface tension, thereby imparting excellent wettability and penetrability, while taking water solubility and environmental concerns into consideration, as well as to provide inks and paper coating agents containing the composition.

[Solution] A water-soluble surfactant composition comprising (A) an acetylene glycol represented by the following formula (1):

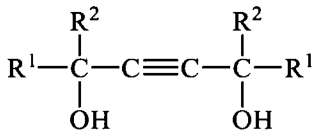

(1)

wherein $R^1$ and $R^2$ each represent an alkyl group having 1 to 5 carbon atoms, and/or an acetylene glycol ethoxylate represented by the following formula (2):

EP 4 786 563 A1

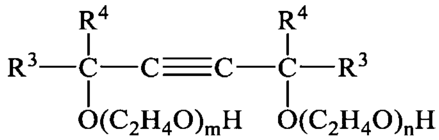

(2)

wherein $R^3$ and $R^4$ each represent an alkyl group having 1 to 5 carbon atoms, m and n each are a positive number of 0.5 to 25, and the sum of m and n is 1 to 40, and (B) a polyoxyalkylene adduct-type nonionic surfactant containing at least one bio-derived polyoxyalkylene adduct-type nonionic surfactant, wherein the water-soluble surfactant composition has a biomass content of 10% or more as determined in accordance with ASTM D6866-22.

## Description

### TECHNICAL FIELD

The present invention relates to a biomass water-soluble surfactant composition. In particular, the present invention relates to a biomass water-soluble surfactant composition which, when added to a paper coating agent, an ink, and the like, exhibits excellent water solubility, and exhibits excellent wettability, penetrability, and antifoaming properties due to low static surface tension and low dynamic surface tension, and is environmentally compatible; and the present invention further relates to an ink and a paper coating agent containing the composition.

### BACKGROUND ART

In recent years, the printing industry and the paper manufacturing industry have been shifting toward water-based inks in consideration of environmental concerns and the like. When, however, water-based inks are used, their production speeds are less than those of solvent-based inks due to their slower drying speeds, leaving no choice but to constantly strive for higher speeds to improve productivity, and making it desirable to improve ink and paper coating agent performance to accommodate high-speed printing and high-speed coating.

Against such a background, the ink and water-based paint industries need surfactants with an excellent surface tension reduction ability to impart wetting, penetrability, and dispersibility relative to a substrate. When selecting a surfactant, excellent static surface tension is preferred when the system is in a static state; and the dynamic surface tension index has become important for high-speed use due to the aforementioned need for faster printing speeds to improve productivity.

Acetylene glycol-based surfactants, such as 2,4,7,9-tetramethyl-5-decyne-4,7-diol and its ethoxylates, provide a balanced reduction of static surface tension and dynamic surface tension, and have been used as wetting agents, dispersing aids, and the like, for inks and coatings.

However, acetylene glycol-based surfactants have problems, such as low water solubility or being a solid at room temperature, and it is known that using acetylene glycol-based surfactants in combination with polyoxyalkylene alkyl ethers, as in Japanese Patent Application Laid-Open No. 2002-348500 and Japanese Patent Application Laid-Open No. 2003-253599, enables them to exhibit transparency, wettability, penetrability, antifoaming properties, and dispersibility, even in aqueous systems.

Furthermore, recent years have seen advancement in the development of biomass inks for printing, which use plant-derived resources as biomass. The use of biomass-derived raw materials made from plants as starting materials enables carbon dioxide that is absorbed and fixed by the growth of plants, and the like, to offset the amount of carbon dioxide emitted during combustion, thereby not affecting the increase or decrease of carbon dioxide in the air (also referred to as carbon neutrality). The use of biomass-derived raw materials as ink constituent components has therefore become an urgent priority to prevent the increase of carbon dioxide, which is a greenhouse gas. It is therefore desirable to make water-soluble surfactant compositions biomass-based, while maintaining performance comparable to conventional water-soluble surfactant compositions.

### PRIOR LITERATURE

### PATENT LITERATURE

Patent Literature 1: Japanese Patent Application Laid-Open No. 2002-348500
Patent Literature 2: Japanese Patent Application Laid-Open No. 2003-253599

### SUMMARY OF THE INVENTION

### PROBLEM TO BE SOLVED BY THE INVENTION

The present invention was made to improve upon the aforementioned circumstances, and one of the objects of the present invention is to provide a biomass water-soluble surfactant composition which has excellent solubility in water, exhibits excellent antifoaming properties and dispersibility, and further has low dynamic surface tension, thereby imparting excellent wettability and penetrability, while taking water solubility and environmental concerns into consideration, as well as to provide inks and paper coating agents containing the composition.

## MEANS FOR SOLVING THE PROBLEMS

As a result of intensive studies conducted to achieve the aforementioned objective, the present inventors have found that a water-soluble surfactant composition prepared by combining (A) a specific acetylene glycol and/or an ethoxylated product of an acetylene glycol with (B) a specific polyoxyalkylene adduct-type nonionic surfactant, particularly when incorporated into inks, paper coating agents, and the like, exhibits excellent antifoaming properties and dispersibility, and further has low dynamic surface tension, thereby imparting excellent wettability and penetrability, has good solubility in water, is applicable to high-speed printing and high-speed coating, and is further compatible with recent environmental concerns, and have thus accomplished the present invention.

That is, the present invention provides:

[1] A water-soluble surfactant composition comprising

(A) an acetylene glycol represented by the following formula (1):

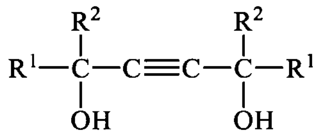

(1)

wherein $R^1$ and $R^2$ each represent an alkyl group having 1 to 5 carbon atoms,
and/or an acetylene glycol ethoxylate represented by the following formula (2):

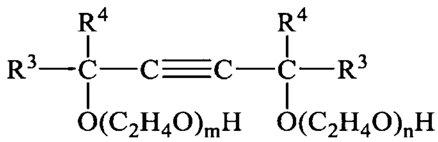

(2)

wherein $R^3$ and $R^4$ each represent an alkyl group having 1 to 5 carbon atoms, m and n each are a positive number of 0.5 to 25, and the sum of m and n is 1 to 40,

and (B) a polyoxyalkylene adduct-type nonionic surfactant containing at least one bio-derived polyoxyalkylene adduct-type nonionic surfactant,
wherein the water-soluble surfactant composition has a biomass content of 10% or more as determined in accordance with ASTM D6866-22.

The present invention further provides a water-soluble surfactant composition comprising at least one configuration among the following items [2] to [12].

[2] The afore-mentioned water-soluble surfactant compositions,
wherein the polyoxyalkylene adduct-type nonionic surfactant is a polyoxyalkylene addition polymer of a compound selected from the group consisting of aliphatic alcohols, unsaturated fatty acids, saturated fatty acids, fatty acid esters, sorbitan fatty acid esters, and glycerin fatty acid esters, each having 6 to 60 carbon atoms, and has an oxyalkylene addition molar amount of 1 to 60 mol.

[3] The afore-mentioned water-soluble surfactant compositions, wherein component (B) is represented by the following formula (3):

$$R^5O(C_2H_4O)_x(C_3H_6O)_yH \qquad (3)$$

wherein $R^5$ is a linear, cyclic, or branched saturated or unsaturated hydrocarbon group having 6 to 60 carbon atoms and optionally containing a heteroatom, x is a positive number of 1 to 60, y is 0 or a positive number of 1 to 60, and the oxyalkylene units represented in parentheses for x and y may be randomly bonded or have a block structure.

[4] The afore-mentioned water-soluble surfactant compositions, wherein the amount of component (A) is 5 to 80% by mass based on the total mass of the composition, and the amount of component (B) is 20 to 95% by mass based on the total mass of the composition.

[5] The afore-mentioned water-soluble surfactant compositions, wherein component (B) has a HLB of 10 to 18.

[6] The afore-mentioned water-soluble surfactant compositions, wherein component (B) has a HLB of 12 to 16.

[7] The afore-mentioned water-soluble surfactant compositions, wherein component (B) has a biomass content of 10% to 100% as determined in accordance with ASTM D6866-22.

[8] The afore-mentioned water-soluble surfactant compositions, wherein in said formula (3), $R^5$ is a linear, cyclic, or branched saturated or unsaturated hydrocarbon group having 6 to 60 carbon atoms and optionally containing a heteroatom, x is a positive number of 1 to 60, and y is 0.

[9] The afore-mentioned water-soluble surfactant compositions, wherein in said formula (3), $R^5$ is a linear, cyclic, or branched saturated or unsaturated hydrocarbon group having 30 to 60 carbon atoms and optionally containing a heteroatom, x is a positive number of 30 to 60, and y is 0.

[10] The afore-mentioned water-soluble surfactant compositions, wherein in said formula (3), $R^5$ is a group, having 6 to 60 carbon atoms, selected from the group consisting of an aliphatic hydrocarbon group, an alicyclic hydrocarbon group, an aromatic hydrocarbon group, an unsaturated fatty acid residue, a saturated fatty acid residue, a fatty acid ester residue, a sorbitan fatty acid ester residue, and a glycerin fatty acid ester residue.

[11] The afore-mentioned water-soluble surfactant compositions, further comprising (C) a water-soluble organic solvent.

[12] The afore-mentioned water-soluble surfactant compositions, wherein an aqueous solution containing 0.1% by mass of the water-soluble surfactant composition has a dynamic surface tension of 60 mN/m or less at each of 1 Hz and 10 Hz at room temperature.

The present invention further provides a paper coating agent or an ink having at least one configuration of the following items [13] to [16].

[13] A paper coating agent comprising the water-soluble surfactant composition according to any one of the items [1] to [12].

[14] The afore-mentioned paper coating agent, wherein the amount of the water-soluble surfactant composition is 0.05 to 10% by mass, based on the total amount of the paper coating agent.

[15] An ink comprising the water-soluble surfactant composition according to any one of the items [1] to [12].

[16] The afore-mentioned ink, wherein the amount of the water-soluble surfactant composition is 0.05 to 10% by mass, based on the total amount of the ink.

## EFFECTS OF THE INVENTION

The water-soluble surfactant composition of the present invention has low dynamic surface tension, and therefore, when added to a paper coating agent, increases the dispersibility of fine particles used in a receiving layer. Further, when added to an ink, the composition exhibits wettability, penetrability, and antifoaming properties with respect to a substrate, thereby exhibiting printability and color development, and is applied to high-speed printing and high-speed coating. Furthermore, the water-soluble surfactant composition of the present invention has a biomass content of 10% or more and is compatible with environmental concerns. Owing to these characteristics, the water-soluble surfactant composition of the present invention is extremely advantageous in practical use.

## MODE FOR CARRYING OUT THE INVENTION

The water-soluble surfactant composition of the present invention comprises (A) a specific acetylene glycol and/or acetylene glycol ethoxylate, and (B) a specific polyoxyalkylene adduct-type nonionic surfactant.

Component (A)

Component (A) of the present invention is one or more acetylene glycols selected from acetylene glycols represented by the following formula (1) and/or acetylene glycol ethoxylates represented by the following formula (2).

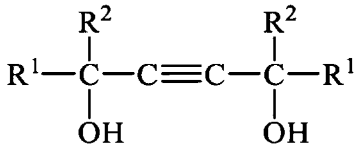

(1)

wherein $R^1$ and $R^2$ each represent an alkyl group having 1 to 5 carbon atoms;

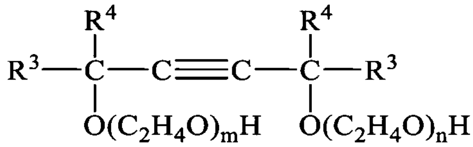 (2)

wherein $R^3$ and $R^4$ each represent an alkyl group having 1 to 5 carbon atoms, m and n each are a positive number of 0.5 to 25, and the sum of m and n is 1 to 40.

$R^1$ and $R^2$ each represent an alkyl group having 1 to 5 carbon atoms. $R^3$ and $R^4$ each represent an alkyl group having 1 to 5 carbon atoms. Preferably, $R^1$ and $R^2$, as well as $R^3$ and $R^4$, are independently of each other, alkyl groups having 3 to 5 carbon atoms. m and n are each a positive number of 0.5 to 25, preferably a positive number of 1 to 20. The sum of m and n is 1 to 40, preferably a positive number of 2 to 35.

Examples of the acetylene glycol of afore-mentioned formula (1) include 2,5,8,11-tetramethyl-6-dodecyne-5,8-diol, 5,8-dimethyl-6-dodecyne-5,8-diol, 2,4,7,9-tetramethyl-5-decyne-4,7-diol, 4,7-dimethyl-5-decyne-4,7-diol, 8-hexadecyne-7,10-diol, 7-tetradecyne-6,9-diol, 2,3,6,7-tetramethyl-4-octyne-3,6-diol, 3,6-diethyl-4-octyne-3,6-diol, 3,6-dimethyl-4-octyne-3,6-diol, and 2,5-dimethyl-3-hexyne-2,5-diol; and examples of the acetylene glycol ethoxylates of formula (2) include ethylene oxide derivatives of the acetylene glycol.

Here, the total number of moles of ethylene oxide added in the ethoxylated product represented by the afore-mentioned formula (2) is 1 to 40 mol, preferably 2 to 12 mol. If the total number of moles of ethylene oxide added exceeds 40 mol, the static surface tension and dynamic surface tension of the ink composition increases.

The amount of component (A) is not particularly limited as long as the biomass water-soluble surfactant composition contains component (A) as an active ingredient; however, the amount is preferably 5 to 80% by mass, more preferably 7 to 75% by mass, relative to the total mass of the composition. If the amount of component (A) exceeds the afore-mentioned upper limit, the solubility of the biomass water-soluble surfactant composition in water deteriorates. If the amount is less than the afore-mentioned lower limit, foaming may increase. In addition, within the range in which the biomass content of the biomass water-soluble surfactant composition of the present invention satisfies the range described below, component (A) having a desired biomass content may be used.

Component (B)

Component (B) of the present invention is a nonionic surfactant containing at least one bio-derived polyoxyalkylene adduct-type nonionic surfactant. The polyoxyalkylene adduct-type nonionic surfactant is preferably a polyoxyalkylene addition polymer of a compound having 6 to 60 carbon atoms, the compound being selected from aliphatic alcohols, unsaturated fatty acids, saturated fatty acids, fatty acid esters, sorbitan fatty acid esters, glycerin fatty acid esters, and the like. The polyoxyalkylene adduct-type nonionic surfactant preferably has an average number of moles of oxyalkylene added of from 1 to 60. The polyoxyalkylene addition polymer is preferably a polyethylene oxide addition polymer, a polypropylene oxide addition polymer, or a polyethylene oxide-polypropylene oxide addition polymer. The number of moles of oxyalkylene added is preferably 1 to 60, preferably 5 to 60, more preferably 30 to 60, and still more preferably 35 to 60.

Component (B) of the present invention is preferably represented by the following formula (3).

$$R^5O(C_2H_4O)_x(C_3H_6O)_yH \qquad (3)$$

In formula (3), $R^5$ is a linear, cyclic, or branched saturated or unsaturated hydrocarbon group having 6 to 60 carbon atoms and optionally containing a heteroatom; x is a positive number of 1 to 60; y is 0 or a positive number of 1 to 60; and the oxyalkylene units in parentheses for x and y may be randomly bonded or may have a block structure.

x is a positive number of 1 to 60. A compound in which x is a positive number of 5 to 30, preferably a positive number of 5 to 25, may also be used; however, preferably, x is a positive number of 5 to 60, more preferably x is a positive number of 10 to 60, still more preferably x is a positive number of 30 to 60, and even more preferably x is a positive number of 35 to 60. y is 0 or a positive number of 1 to 60, preferably 0 or a positive number of 1 to 50. The sum of x and y is preferably 1 to 60, preferably 5 to 60, more preferably 30 to 60, and even more preferably 35 to 60. Particularly preferably, y is 0.

$R^5$ is a linear, cyclic, or branched saturated or unsaturated hydrocarbon group having 6 to 60 carbon atoms, preferably 10 to 60 carbon atoms, and optionally containing a heteroatom. The carbon atoms of the hydrocarbon group are more preferably 10 to 29 carbon atoms, even more preferably 10 to 24 carbon atoms, or more preferably 25 to 60 carbon atoms, even more preferably 30 to 60 carbon atoms. The hydrocarbon group is more preferably a group selected from the group consisting of an aliphatic hydrocarbon group, an alicyclic hydrocarbon group, an aromatic hydrocarbon group, an unsaturated fatty acid residue, a saturated fatty acid residue, a fatty acid ester residue, a sorbitan fatty acid ester residue, and a glycerin fatty acid ester residue. Examples of the aliphatic hydrocarbon group include alkyl groups such as a decyl

group, an undecyl group, a lauryl group, a tridecyl group, a tetradecyl group, a pentadecyl group, a palmityl group, a heptadecyl group, a stearyl group, a behenyl group, a 2-ethylhexyl group, and an isostearyl group; and alkenyl groups such as an oleyl group, a palmitoyl group, and an eicosenyl group. Examples of the alicyclic hydrocarbon group include a monocyclic or polycyclic cycloalkyl group having 6 to 60 carbon atoms. Examples of the aromatic hydrocarbon group include a phenyl group, a naphthyl group, and a biphenyl group. $R^5$ is more preferably a decyl group, an undecyl group, a lauryl group, a stearyl group, and an oleyl group.

Examples of the polyoxyalkylene adduct-type nonionic surfactant in which $R^5$ is an unsaturated fatty acid residue, a saturated fatty acid residue, a fatty acid ester residue, a sorbitan fatty acid ester residue, or a glycerin fatty acid ester residue include polyoxyalkylene addition polymers of palmitoleic acid, sapienic acid, oleic acid, erucic acid, linoleic acid, docosadienoic acid, linolenic acid, lauric acid, myristic acid, palmitic acid, stearic acid, arachidic acid, cerotic acid, sorbitan oleate, sorbitan laurate, sorbitan stearate, castor oil, hydrogenated castor oil, and the like. Preferably, the polyoxyalkylene addition polymer is a polyethylene oxide addition polymer, a polypropylene oxide addition polymer, or a polyethylene oxide-polypropylene oxide addition polymer, and more preferably a polyethylene oxide addition polymer.

More preferably, component (B) is a polyoxyalkylene adduct-type nonionic surfactant represented by the following formula (4):

$$R^5O(C_2H_4O)_xH \qquad (4)$$

wherein $R^5$ is a linear, cyclic, or branched saturated or unsaturated hydrocarbon group having 6 to 60 carbon atoms and optionally containing a heteroatom, and x is a positive number of 1 to 60.

More preferably, component (B) is a polyoxyalkylene adduct-type nonionic surfactant represented the following formula (4').

$$R^5O(C_2H_4O)_xH \qquad (4')$$

wherein $R^5$ is a linear, cyclic, or branched saturated or unsaturated hydrocarbon group having 30 to 60 carbon atoms and optionally containing a heteroatom, and x is a positive number of 30 to 60.

Even more preferably, in afore-mentioned formula (4'), $R^5$ is a linear or branched-chain saturated or unsaturated hydrocarbon group having 35 to 60 carbon atoms, and x is 35 to 60.

More specifically, examples of the compounds, wherein y is 0, include the following compounds.

$C_{12}H_{25}O(C_2H_4O)_1H$

$C_{12}H_{25}O(C_2H_4O)_2H$

$C_{12}H_{25}O(C_2H_4O)_3H$

$C_{12}H_{25}O(C_2H_4O)_4H$

$C_{12}H_{25}O(C_2H_4O)_5H$

$C_{12}H_{25}O(C_2H_4O)_6H$

$C_{12}H_{25}O(C_2H_4O)_7H$

$C_{12}H_{25}O(C_2H_4O)_9H$

$C_{12}H_{25}O(C_2H_4O)_{10}H$

$C_{12}H_{25}O(C_2H_4O)_{12}H$

$C_{12}H_{25}O(C_2H_4O)_{16}H$

$C_{12}H_{25}O(C_2H_4O)_{23}H$

$C_{12}H_{25}O(C_2H_4O)_{30}H$

$C_{16}H_{33}O(C_2H_4O)_5H$

$C_{16}H_{33}O(C_2H_4O)_7H$

$C_{16}H_{33}O(C_2H_4O)_{20}H$

$C_{16}H_{33}O(C_2H_4O)_{25}H$

$C_{18}H_{37}O(C_2H_4O)_5H$

$C_{18}H_{37}O(C_2H_4O)_7H$

$C_{18}H_{37}O(C_2H_4O)_{12}H$

$C_{18}H_{37}O(C_2H_4O)_{20}H$

$C_{18}H_{37}O(C_2H_4O)_{25}H$

$C_{18}H_{35}O(C_2H_4O)_5H$

$C_{18}H_{35}O(C_2H_4O)_{25}H$

$C_{18}H_{35}O_2(C_2H_4O)_6H$

(ethylene oxide addition polymer of saturated fatty acid)

$C_{18}H_{33}O_2(C_2H_4O)_3H$

(ethylene oxide addition polymer of unsaturated fatty acid)

$C_{18}H_{33}O_2(C_2H_4O)_6H$

(ethylene oxide addition polymer of unsaturated fatty acid)

$C_{18}H_{33}O_2(C_2H_4O)_{12}H$

(ethylene oxide addition polymer of unsaturated fatty acid)

$C_{18}H_{31}O_6(C_2H_4O)_{20}H_3$

(ethylene oxide addition polymer of sorbitan saturated fatty acid)

$C_{24}H_{41}O_6(C_2H_4O)_{20}H_3$

(ethylene oxide addition polymer of sorbitan unsaturated fatty acid)

$C_{57}H_{104}O_9(C_2H_4O)_{55}H_3$

(ethylene oxide addition polymer of glycerin unsaturated fatty acid ester)

$C_{57}H_{110}O_9(C_2H_4O)_{60}H_3$

(ethylene oxide addition polymer of glycerin saturated fatty acid ester)

Examples of the compounds, wherein y is a positive number, include the following compounds.

$C_{12}H_{25}O(C_2H_4O)_6(C_3H_6O)_2(C_2H_4O)_6(C_3H_6O)_8H$,

$C_{13}H_{27}O(C_2H_4O)_6(C_3H_6O)_2(C_2H_4O)_6(C_3H_6O)_8H$,

$C_{12}H_{25}O(C_2H_4O)_w(C_3H_6O)_x(C_2H_4O)_y(C_3H_6O)_zH$

(wherein w + y = 15 and x + z = 4),

$C_{13}H_{27}O(C_2H_4O)_w(C_3H_6O)_x(C_2H_4O)_y(C_3H_6O)_zH$

(wherein w + y = 15 and x + z = 4),

$C_{12}H_{25}O(C_2H_4O)_8(C_3H_6O)_2(C_2H_4O)_6H$,

$C_{13}H_{27}O(C_2H_4O)_8(C_3H_6O)_2(C_2H_4O)_6H$,

$C_{12}H_{25}O(C_2H_4O)_{12}(C_3H_6O)_2(C_2H_4O)_{12}H$,

$C_{13}H_{27}O(C_2H_4O)_{12}(C_3H_6O)_2(C_2H_4O)_{12}H$,

$CH_3(CH_2)_9(CH_3)HO(C_2H_4O)_7(C_3H_6O)_{4.5}H$,

$CH_3(CH_2)_{11}(CH_3)CHO(C_2H_4O)_7(C_3H_6O)_{4.5}H$,

$CH_3(CH_2)_9(CH_3)CHO(C_2H_4O)_5(C_3H_6O)_{3.5}H$,

$CH_3(CH_2)_{11}(CH_3)CHO(C_2H_4O)_5(C_3H_6O)_{3.5}H$,

$C_{14}H_{29}O(C_2H_4O)_{14}(C_3H_6O)_2H$,

$C_{11}H_{23}O(C_2H_4O)_8H$, and

$C_{10}H_{21}O(C_2H_4O)_{11}H$

These may be used alone or in combination of two or more thereof.

Commercially available examples of the afore-mentioned polyoxyalkylene adduct-type nonionic surfactant include the VITA series manufactured by Clariant, such as the Genapol LA series, the Emulsogen series, the Genagen O series, and the Hostacerin series. Among these, particularly preferred are the Genapol LA series, the Emulsogen series, the Genagen O series, and the Hostacerin series of the VITA series manufactured by Clariant, which are produced using biomass-derived raw materials. Further examples include the Naroacty series, the Sedoran series, and the Emulmin series manufactured by Sanyo Chemical Industries, Ltd.; the Emulgen series manufactured by Kao Corporation; the Conion series and the Rikanon series manufactured by New Japan Chemical Co., Ltd.; and the Adekatol series manufactured by Adeka Corporation.

Component (B) of the present invention comprises at least one bio-derived polyoxyalkylene adduct-type nonionic surfactant. The bio-derived polyoxyalkylene adduct-type nonionic surfactant preferably has a biomass content of 10% or more, that is, a biomass content of 10 to 100%, preferably 20 to 100%, and more preferably 30 to 100%. Component (B) of the present invention may further comprise one or more petroleum-derived polyoxyalkylene adduct-type nonionic surfactants in combination with one or more bio-derived polyoxyalkylene adduct-type nonionic surfactants. When two or more polyoxyalkylene adduct-type nonionic surfactants are used in combination, it is sufficient that the overall biomass content of the polyoxyalkylene adduct-type nonionic surfactants satisfies the afore-mentioned range. The biomass content of component (B) is calculated by a method described below in accordance with ASTM D6866-22. The biomass content of the polyoxyalkylene adduct-type nonionic surfactant is defined as the ratio of the amount of $^{14}C$ carbon contained in the polyoxyalkylene adduct-type nonionic surfactant to the total carbon content of the polyoxyalkylene adduct-type nonionic surfactant.

The average molecular weight of the polyoxyalkylene adduct-type nonionic surfactant as component (B) is a weight-average molecular weight measured by gel permeation chromatography (GPC), and is in the range of 500 to 10,000, particularly preferably 500 to 6,000. When the molecular weight is less than 500, the solubilizing ability and solubility in water decrease, resulting in the formation of insoluble matter when incorporated into an ink. On the other hand, when the molecular weight exceeds 10,000, the dynamic surface tension becomes high, which tends to cause bleeding during printing.

In the polyoxyalkylene adduct-type nonionic surfactant as component (B), the number of moles of ethylene oxide added is preferably in the range of 1 to 60. If the number of moles of ethylene oxide added is less than 1 mol, the solubilizing

ability decreases, resulting in the formation of aggregates. On the other hand, if the number of moles of ethylene oxide added exceeds 60 mol, although the solubilizing ability is improved, the dynamic surface tension increases, which tends to cause cissing during high-speed coating.

The HLB of the polyoxyalkylene adduct-type nonionic surfactant as component (B) is preferably in the range of 10 to 18, and particularly preferably in the range of 12 to 16. If the HLB is less than 10, the hydrophobicity increases and the solubility in water decreases, making it difficult to obtain sufficient water solubility. On the other hand, if the HLB exceeds 18, the dynamic surface tension becomes high, which tends to cause bleeding during printing.

The amount of component (B) contained in the water-soluble surfactant composition of the present invention is not particularly limited, as long as component (B) is contained in the biomass water-soluble surfactant composition as an active ingredient. The amount of component (B) is preferably 20 to 95% by mass, more preferably 25 to 90% by mass, and still more preferably 30 to 75% by mass, relative to the total mass of the composition. More preferably, the content of component (B) is 20 to 95 parts by mass, more preferably 25 to 90 parts by mass, and still more preferably 30 to 75 parts by mass, relative to a total of 100 parts by mass of components (A) and (B). If the amount of component (B) is less than the afore-mentioned lower limit, component (A) is not sufficiently solubilized, resulting in decreased water solubility and the formation of aggregates upon formulation. On the other hand, if the amount of component (B) exceeds the afore-mentioned upper limit, excessive foaming occurs during formulation and the dynamic surface tension increases, which tends to cause coating unevenness and cissing.

The water-soluble surfactant composition of the present invention may further comprise, as a third component (C), deionized water or a water-soluble organic solvent selected from ethylene glycol, diethylene glycol, triethylene glycol, tetraethylene glycol, polyethylene glycol, propylene glycol, dipropylene glycol, 1,3-propanediol, 1,4-butanediol, glycerin, and the like. The content of component (C) may be 0 to 70% by mass, preferably 0 to 60% by mass, and more preferably 0 to 50% by mass, based on 100% by mass of the water-soluble surfactant composition, as long as the properties of the water-soluble surfactant composition are not impaired. When the water-soluble organic solvent is included, the lower limit thereof is 1% by mass or, more preferably, 5% by mass or more.

The water-soluble surfactant composition of the present invention may be obtained, for example, by mixing the above-described components using a known mixing and preparation method, such as a propeller-type stirrer. Components that are solid at room temperature may, if necessary, be heated to 50 to 80°C during mixing.

The biomass water-soluble surfactant composition of the present invention is characterized in that it has a biomass content of 10% or more, more preferably 20% or more. The upper limit of the biomass content is not particularly limited, but is preferably 100% or less, more preferably 90% or less, and still more preferably 80% or less. In general, plant-derived (biomass-derived) raw materials and petroleum-derived raw materials do not differ in physical properties such as molecular weight, mechanical properties, or thermal properties. Therefore, biomass content is commonly used to distinguish between these raw materials. In the present invention, the biomass content is defined as the ratio of the amount of $^{14}C$ carbon contained in the surfactant composition to the total carbon content of the surfactant composition.

Carbon derived from petroleum-based raw materials does not contain $^{14}C$ carbon (radiocarbon-14, having a half-life of 5,730 years), and therefore can be distinguished from carbon derived from plants (biomass). The concentration of $^{14}C$ carbon in the surfactant composition is measured by accelerator mass spectrometry and is used as an index of the proportion of plant-derived raw materials. Accordingly, in a plant-derived water-soluble surfactant composition, the biomass content corresponding to the amount of plant-derived carbon can be obtained by measuring the $^{14}C$ carbon concentration in the water-soluble surfactant composition.

The biomass content is measured by combusting a sample to be measured to generate carbon dioxide, purifying the generated carbon dioxide in a vacuum line, and reducing the purified carbon dioxide with hydrogen using iron as a catalyst to produce graphite. The resulting graphite is then loaded into a dedicated $^{14}C$ accelerator mass spectrometry (AMS) apparatus based on a tandem accelerator, and $^{14}C$ counting, $^{13}C$ concentration (C13/C12), and $^{14}C$ concentration (C14/C12) are measured. Based on these measured values, the ratio of the $^{14}C$ concentration of carbon in the sample relative to Standard Modern Carbon is calculated. Oxalic acid (HOXII) provided by the National Institute of Standards and Technology (NIST) is used as a standard sample in the measurements. Methods for analyzing biomass content are established in international standards ASTM D6866 and ISO 16620. In the present invention, the biomass content is a value calculated in accordance with ASTM D6866-22.

The biomass water-soluble surfactant composition of the present invention preferably has a dynamic surface tension of 60 mN/m or less, more preferably 55 mN/m or less, and still more preferably 50 mN/m or less, as measured at both 1 Hz and 10 Hz in a 0.1% by mass aqueous solution. If the dynamic surface tension at 1 Hz and 10 Hz of the aqueous solution containing 0.1% by mass of the water-soluble surfactant composition exceeds the afore-mentioned upper limit, cissing and bleeding due to insufficient penetration may occur during printing or coating using a printing machine or a coating machine, even if no cissing is observed during brush application or bar-coater coating. The dynamic surface tension is a value measured at 1 Hz and 10 Hz for the aqueous solution containing 0.1% by mass of the water-soluble surfactant composition using a bubble-pressure-type dynamic surface tensiometer (KRUSS BP-100, manufactured by KRUSS).

The static surface tension of the biomass water-soluble surfactant composition of the present invention is preferably about 40 mN/m or less. The static surface tension is a value measured for a 0.1% by mass aqueous solution of the water-soluble surfactant composition using a surface tensiometer (DY-500, manufactured by Kyowa Interface Science Co., Ltd.).

The biomass water-soluble surfactant composition of the present invention exhibits antifoaming properties with respect to water-soluble polymer compounds. The antifoaming properties may be evaluated by measuring foamability. For example, the foam height after shaking for 1 minute (foamability) is preferably 40 mL or less, more preferably 35 mL or less. In addition, the foam height after shaking for 1 minute and then allowing the sample to stand for 5 minutes (antifoaming property) is preferably 40 mL or less, more preferably 35 mL or less. If the foam height exceeds 40 mL, bleeding caused by poor ink dispersibility may occur.

The water-soluble polymer compounds are not particularly limited and may be appropriately selected from known water-soluble polymer compounds. Examples of natural water-soluble polymer compounds include plant-derived polymer compounds such as gum arabic, tragacanth gum, guar gum, karaya gum, locust bean gum, arabinogalactan, pectin, and quince seed starch; seaweed-derived polymer compounds such as alginic acid, carrageenan, and agar; animal-derived polymer compounds such as gelatin, casein, albumin, and collagen; and microorganism-derived polymer compounds such as xanthan gum and dextran. Examples of water-soluble polymer compounds chemically modified from natural materials include cellulose-based polymer compounds such as methyl cellulose, ethyl cellulose, hydroxyethyl cellulose, hydroxypropyl cellulose, and carboxymethyl cellulose; starch-based polymer compounds such as sodium starch glycolate and sodium starch phosphate; and seaweed-based polymer compounds such as propylene glycol alginate. Examples of synthetic water-soluble polymer compounds include vinyl-based polymer compounds such as polyvinyl alcohol, polyvinylpyrrolidone, and polyvinyl methyl ether; acrylic resins such as polyacrylamide, polyacrylic acid or alkali metal salts thereof, and water-soluble styrene-acrylic resins; water-soluble styrenemaleic acid resins; water-soluble vinylnaphthalene-acrylic resins; water-soluble vinylnaphthalene-maleic acid resins; alkali metal salts of polyvinyl alcohol, polyvinylpyrrolidone, polyallylamine, polyethyleneimine, or β-naphthalenesulfonic acid-formalin condensates; and polymer compounds having salts of cationic functional groups, such as quaternary ammonium groups or amino groups, in side chains thereof.

When the biomass water-soluble surfactant composition of the present invention is used as an aqueous wetting agent for a paper coating agent, or when an ink is prepared using the biomass water-soluble surfactant composition, the water-soluble surfactant composition is preferably included in an amount of 0.05 to 10% by mass, more preferably 0.05 to 5% by mass, based on the total amount of the paper coating agent or the ink.

A paper coating agent comprising the biomass water-soluble surfactant composition of the present invention may further comprise fine particles, a hydrophilic binder, and other additives, in addition to the water-soluble surfactant composition of the present invention.

Examples of the fine particles include at least one type selected from the group consisting of organic fine particles, silica fine particles, alumina fine particles, and pseudoboehmite-type aluminum hydroxide fine particles. Among these, silica fine particles, alumina fine particles, and pseudoboehmite-type aluminum hydroxide fine particles are preferred. The average primary particle diameter of the fine particles is preferably 50 nm or less, more preferably 30 nm or less, and particularly preferably 15 nm or less. In particular, when the average primary particle diameter of the fine particles is 15 nm or less, ink absorption properties can be effectively improved, and at the same time, the glossiness of the surface of an ink-receiving layer can also be enhanced. The lower limit of the average primary particle diameter of the fine particles is not particularly limited, but is preferably 1 nm or more. The amount of the fine particles contained in the paper coating agent is not particularly limited, but is preferably 1 to 50% by mass, more preferably 5 to 40% by mass, based on the total mass of the paper coating agent.

Examples of the hydrophilic binder include polyvinyl alcohol, oxidized starch, and etherified starch; cellulose derivatives such as carboxymethyl cellulose and hydroxyethyl cellulose; casein, gelatin, soy protein, and silanol-modified polyvinyl alcohol; conjugated diene latexes such as styrene-butadiene copolymers and methyl methacrylate-butadiene copolymers; acrylic copolymer latexes such as acrylate and methacrylate copolymers; vinyl polymer latexes such as ethylene-vinyl acetate copolymers; and synthetic resins such as maleic anhydride resins, melamine resins, urea resins, polymethyl methacrylate, polyurethane resins, unsaturated polyesters, polyvinyl butyral, and alkyd resins. These hydrophilic binders may be used alone or in combination of two or more thereof. Furthermore, from the viewpoint of ink absorbability, it is more preferable that the hydrophilic binder contains at least one selected from the group consisting of polyvinyl alcohol resins, cellulosic resins, resins having ether bonds, resins having carbamoyl groups, resins having carboxyl groups, and gelatins. When polyvinyl alcohol is used, the degree of saponification is preferably 82 mol% or more, more preferably 86 to 99 mol%, from the viewpoint of color density. In addition, the degree of polymerization is preferably 300 to 4,500, more preferably 500 to 2,600, from the viewpoint of obtaining sufficient film strength. The amount of the hydrophilic binder to be incorporated into the paper coating agent is not particularly limited, but is preferably 45 to 95% by mass, more preferably 55 to 90% by mass, as a 1 to 5% by mass aqueous solution, based on the total mass of the paper coating agent.

Examples of other additives that may be appropriately incorporated include pigment dispersants, thickeners, flow modifiers, antifoaming agents, foam suppressants, release agents, foaming agents, penetrants, coloring dyes, coloring pigments, fluorescent brighteners, ultraviolet absorbers, antioxidants, preservatives, antifungal agents, water-resistance-imparting agents, wet strength agents, and dry strength agents. These additives may be added in an amount corresponding to the balance of 100% by mass of the paper coating agent, excluding the amounts of the above-described components.

The paper coating agent is obtained by blending the biomass water-soluble surfactant composition of the present invention, the fine particles, the hydrophilic binder, and other additives. Coated paper is obtained by applying the paper coating agent to a surface to be coated for printing by a known method, such as gravure coating, dipping, coating, or spraying. The coating may be applied at a coating weight of 3 to 50 $g/m^2$, more preferably 5 to 20 $g/m^2$. The coated paper is obtained by controlling the coating speed to 20 to 2,000 m/min, more preferably 40 to 2,000 m/min.

An ink comprising the water-soluble surfactant composition of the present invention may optionally contain, in addition to the water-soluble surfactant composition of the present invention, colorants, solvents such as water and organic solvents, resins, and other additives.

As the colorant, a dye, an organic pigment, or an inorganic pigment may be suitably used. Examples of dyes include those classified in the Colour Index as acid dyes, direct dyes, reactive dyes, vat dyes, sulfur dyes, or food dyes, as well as colorants classified as oil-soluble dyes or basic dyes. Examples of the pigment for a black ink include carbon blacks (C.I. Pigment Black 7) such as furnace black (Color Black), lamp black, acetylene black, and channel black; specifically, for example, Raven (Raven) 7000, Raven 5750, Raven 5250, Raven 5000, Raven 3500, Raven 2000, Raven 1500, Raven 1250, Raven 1200, Raven 1190 ULTRA-II, Raven 1170, and Raven 1255 (all manufactured by Columbian Chemicals Co.); Black Pearls (Black Pearls) L, Regal (Regal) 400R, Regal 330R, Regal 660R, Mogul (Mogul) L, Monarch (Monarch) 700, Monarch 800, Monarch 880, Monarch 900, Monarch 1000, Monarch 1100, Monarch 1300, Monarch 1400, and Vulcan (Valcan) XC-72R (all manufactured by Cabot Corporation); Color Black (Color Black) FW1, Color Black FW2, Color Black FW2 V, Color Black FW18, Color Black FW200, Color Black S150, Color Black S160, Color Black S170, Printex (Printex) 35, Printex U, Printex V, Printex 140U, Printex 140 V, Special Black (Special Black) 6, Special Black 5, Special Black 4A, and Special Black 4 (all manufactured by Degussa AG); No. 25, No. 33, No. 40, No. 47, No. 52, No. 900, No. 2300, MCF-88, MA600, MA7, MA8, and MA100 (all manufactured by Mitsubishi Chemical Corporation); metals such as copper oxides, iron oxides (C.I. Pigment Black 11), and titanium oxide; and organic pigments such as aniline black (C.I. Pigment Black 1). Furthermore, examples of the pigment for a color ink include C.I. pigment yellow 1 (Fast Yellow G), 3, 12 (Disazo Yellow AAA), 13, 14, 17, 24, 34, 35, 37, 42 (yellow iron oxide), 53, 55, 74, 81, 83 (Disazo Yellow HR), 93, 94, 95, 97, 98, 100, 101, 104, 108, 109, 110, 117, 120, 128, 138, 153, and 180; C.I. pigment red 1, 2, 3, 5, 17, 22 (Brilliant Fast Scarlet), 23, 31, 38, 48:2 (Permanent Red 2B (Ba)), 48:2 (Permanent Red 2B (Ca)), 48:3 (Permanent Red 2B (Sr)), 48:4 (Permanent Red 2B (Mn)), 49:1, 52:2, 53:1, 57:1 (Brilliant Carmine 6B), 60:1, 63:1, 63:2, 64:1, 81 (Rhodamine 6G Lake), 83, 88, 101 (red iron oxide), 104, 105, 106, 108 (cadmium red), 112, 114, 122 (quinacridone magenta), 123, 146, 149, 166, 168, 170, 172, 177, 178, 179, 185, 190, 193, 202, 206, 209, and 219; C.I. Pigment Violet 19 and 23; C.I. Pigment Orange 36; C.I. Pigment Blue 1, 2, 15 (Phthalocyanine Blue R), 15:1, 15:2, 15:3 (Phthalocyanine Blue G), 15:4, 15:6 (Phthalocyanine Blue E), 16, 17:1, 56, 60, and 63; and C.I. Pigment Green 1, 4, 7, 8, 10, 17, 18, and 36. The amount of the colorant incorporated into the ink is not particularly limited, but is preferably 0.1 to 15% by mass, more preferably 2 to 10% by mass, based on the total mass of the ink.

Examples of the solvent include water; glycols such as ethylene glycol, diethylene glycol, triethylene glycol, propylene glycol, dipropylene glycol, tripropylene glycol, polyethylene glycol having a molecular weight of 2,000 or less, 1,3-propylene glycol, isopropylene glycol, isobutylene glycol, 1,4-butanediol, 1,3-butanediol, 1,5-pentanediol, 1,6-hexanediol, glycerin, meso-erythritol, and pentaerythritol; alkyl alcohols having 1 to 4 carbon atoms; glycol ethers, formamide, acetamide, dimethyl sulfoxide, sorbitol, sorbitan, acetin, diacetin, triacetin, and sulfolane; and one or more of these solvents may be appropriately selected and used. The amount of the solvent incorporated into the ink is not particularly limited, but is preferably 50 to 99% by mass, more preferably 60 to 95% by mass, based on the total mass of the ink.

The resin preferably comprises a polymer-forming substance having at least one hydrophobic group selected from the group consisting of an alkyl group, a cycloalkyl group, and an aryl group. The polymer-forming substance preferably further has at least one hydrophilic group selected from the group consisting of a carboxyl group, a sulfonic acid group, a hydroxyl group, an amino group, an amide group, and salts thereof. Examples of substances forming dispersed polymers include monomers or oligomers having a polymerizable unsaturated bond, such as an acryloyl group, a methacryloyl group, a vinyl group, or an aryl group. Examples thereof include monofunctional compounds such as styrene, tetrahydrofurfuryl acrylate, butyl methacrylate, ($\alpha$, 2, 3, or 4)-alkylstyrene, ($\alpha$, 2, 3, or 4)-alkoxystyrene, 3,4-dimethylstyrene, $\alpha$-phenylstyrene, divinylbenzene, vinylnaphthalene, dimethylamino(meth)acrylate, dimethylaminoethyl(meth) acrylate, dimethylaminopropyl acrylamide, *N,N*-dimethylaminoethyl acrylate, acryloylmorpholine, *N,N*-dimethylacrylamide, *N*-isopropylacrylamide, *N,N-diethylacrylamide,* methyl(meth)acrylate, ethyl(meth)acrylate, propyl(meth)acrylate, ethylhexyl(meth)acrylate, other alkyl(meth)acrylates, and methoxydiethylene glycol(meth)acrylate; (meth)acrylates of diethylene glycol or polyethylene glycol with an ethoxy group, a propoxy group, or a butoxy group; cyclohexyl(meth)acrylate, benzyl(meth)acrylate, phenoxyethyl(meth)acrylate, isobornyl(meth)acrylate, hydroxyalkyl(meth)acrylate, and other fluorine-containing, chlorine-containing, and silicon-containing (meth)acrylates; (meth)acrylamide, maleic acid amide, and (meth)acrylic acid; and when a crosslinked structure is introduced, examples include compounds having an acrylic group and a methacryl group such as (mono, di, tri, tetra, poly)ethylene glycol di(meth)acrylate; (meth)acrylates of 1,4-butanediol, 1,5-pentanediol, 1,6-hexanediol, 1,8-octanediol, 1,10-decanediol, and the like; trimethylolpropane tri(meth)acrylate and glycerin (di, tri)(meth)acrylate; di(meth)acrylates of ethylene oxide adducts of bisphenol A or F; neopentyl glycol di(meth)acrylate, pentaerythritol tetra(meth)acrylate, and dipentaerythritol hexa(meth)acrylate. The amount of the resin incorporated into the ink is not particularly limited, but is preferably 0 to 30% by mass, more preferably 0 to 20% by mass, based on the total mass of the ink. When the resin is incorporated, the amount thereof is preferably 1% by mass or more.

Other additives, such as ultraviolet absorbers, antioxidants, pH adjusters, preservatives, and viscosity modifiers, may also be appropriately incorporated. These other additives may be incorporated, in addition to the above-described materials, in an amount corresponding to the balance of 100% by mass of the ink composition.

An ink having excellent properties is obtained by dispersing and/or dissolving the biomass water-soluble surfactant composition of the present invention, colorants, solvents, resins, and other additives, followed by mixing and stirring. When the viscosity of the ink is adjusted to 4 mPa·s or less (excluding 0), excellent printing properties are achieved.

## EXAMPLES

The present invention will be explained in more detail with reference to the following Examples and Comparative Examples; however, the present invention is not limited to the following Examples. In the following examples, "parts" and "%" respectively refer to "parts by mass" and "% by mass".

The components used in the Examples and the Comparative Examples are as follows.

Component A

(A-1): Ethoxylated 2,5,8,11-tetramethyl-6-dodecyne-5,8-diol
(molecular weight: 430; HLB: 9.8; in the above formula (2), $R^1$ is a 3-methylbutyl group, $R^2$ is a methyl group, and the average value of m + n in formula (2) (average number of moles of EO groups added) is 4).
(A-2): 2,5,8,11-Tetramethyl-6-dodecyne-5,8-diol
(molecular weight: 430; HLB: 2.7; in the above formula (1), $R^1$ is a 3-methylbutyl group, and $R^2$ is a methyl group).
(A-3): 2,4,7,9-Tetramethyl-5-decyne-4,7-diol
(molecular weight: 226; HLB: 3.0; in the above formula (1), $R^1$ is a 2-methylpropyl group, and $R^2$ is a methyl group)

Component B

In the following, the HLB values were calculated according to the Griffin method.

(B-1): Lauryl alcohol ethoxylate, $R^5O(C_2H_4O)_7H$
(a mixture of compounds represented by the above formula, wherein $R^5$ is a C12 to C14 alkyl group, and the average number of moles of EO groups added is 7 (laureth-7); HLB value: 12.5; molecular weight: 500)
(B-2): Lauryl alcohol ethoxylate, $R^5O(C_2H_4O)_{10}H$
(a mixture of compounds represented by the above formula, wherein $R^5$ is a C12 to C14 alkyl group, and the average number of moles of EO groups added is 10 (laureth-10); HLB value: 14.1; molecular weight: 650)
(B-3): Lauryl alcohol ethoxylate, $R^5O(C_2H_4O)_{12}H$
(a mixture of compounds represented by the above formula, wherein $R^5$ is a C12 to C14 alkyl group, and the average number of moles of EO groups added is 12 (laureth-12); HLB value: 14.8; molecular weight: 750)
(B-4): Lauryl alcohol ethoxylate, $R^5O(C_2H_4O)_{16}H$
(a mixture of compounds represented by the above formula, wherein $R^5$ is a C12 to C14 alkyl group, and the average number of moles of EO groups added is 16 (laureth-16); HLB value: 15.8; molecular weight: 900)
(B-5): Cetearyl alcohol ethoxylate, $R^5O(C_2H_4O)_{20}H$
(a mixture of compounds represented by the above formula, wherein $R^5$ is a C16 to C18 alkyl group, and the average number of moles of EO groups added is 20 (ceteareth-20); HLB value: 15.7; molecular weight: 1200)
(B-6): Polyoxyethylene sorbitan monolaurate
(an ethylene oxide addition polymer of sorbitan monolaurate, wherein the average number of moles of EO groups

added is 20 (polysorbate 20); HLB value: 14.4; molecular weight: 1300)
(B-7): Polyoxyethylene sorbitan oleate
(an ethylene oxide addition polymer of sorbitan monooleate, wherein the average number of moles of EO groups added is 20 (polysorbate 80); HLB value: 13.4; molecular weight: 1300)
(B-8): Polyoxyethylene castor oil
(an ethylene oxide addition polymer of castor oil, wherein the average number of moles of EO groups added is 55 (PEG-55 castor oil); HLB value: 14.8; molecular weight: 3500)
(B-9): Polyoxyethylene hydrogenated castor oil
(an ethylene oxide addition polymer of hydrogenated castor oil, wherein the average number of moles of EO groups added is 60 (PEG-60 hydrogenated castor oil); HLB value: 14.4; molecular weight: 3700)

Reference surfactant:

(C-1): Naroacty CL-160 (a polyoxyalkylene alkyl ether; HLB = 15.2; an alkylene oxide addition product of a synthetic higher alcohol)
The methods for evaluating the physical properties of the surfactant compositions in the Examples and Comparative Examples are as follows.

Biomass Content Analysis

The biomass contents of component (A), component (B), and the solvents constituting the surfactant compositions obtained in Examples 1 to 30, Comparative Examples 1 to 12, and Reference Examples 1 to 3 were analyzed.
The biomass content analysis was performed by measuring the $^{14}C$ concentration using an accelerator mass spectrometer (AMS), and the analysis was conducted in accordance with ASTM D6866-22.
Each sample was sealed in a tin cup and converted into $CO_2$ gas using an elemental analyzer (vario MICRO cube, manufactured by Elementar). The generated $CO_2$ gas was purified using a glass gas purification line (manufactured by Koshin Rikagaku Seisakusho, Ltd.), and subsequently reduced with hydrogen to produce graphite in a tube furnace for graphite reduction (manufactured by Koshin Rikagaku Seisakusho, Ltd.). After preparation, the $^{14}C$ concentration was measured using an accelerator mass spectrometer (Compact AMS: 1.5 ASH, manufactured by NEC). After correcting the measured $^{14}C$ concentration for isotopic fractionation effects, the pMC value and the biomass content were calculated. NIST oxalic acid (SRM 4990C) was used as a standard sample.
The biomass content of each surfactant composition was calculated using the following formula, based on the biomass contents of component (A), component (B), and each solvent obtained by the above analysis.
In the following formula, the term "$^{14}C$ carbon content ratio" represents the biomass content analyzed by the above-described AMS. The term "total carbon content ratio in the structure" represents the total carbon content in the chemical structure of each component.

$^{14}C$ carbon amount in component (A) in the surfactant composition (g) = [Amount of component (A)] × [$^{14}C$ carbon content ratio in component (A)] × [Total carbon content ratio in the structure of component (A)]

$^{14}C$ carbon amount in component (B) in the surfactant composition (g) = [Amount of component (B)] × [$^{14}C$ carbon content ratio in component (B)] × [Total carbon content ratio in the structure of component (B)]

$^{14}C$ carbon amount in solvent components in the surfactant composition (g) = [Amount of solvent components] × [$^{14}C$ carbon content ratio in the solvent components] × [Total carbon content ratio in the structure of the solvent components]

The sum of the $^{14}C$ carbon amount (g) in component (A) in the surfactant composition, the $^{14}C$ carbon amount (g) in component (B) in the surfactant composition, and the $^{14}C$ carbon amount (g) in the solvent components in the surfactant composition, as determined above, was defined as the $^{14}C$ carbon amount (g) in the surfactant composition.

Total carbon amount of component (A) in the surfactant composition (g) = [Amount of component (A)] × [Total carbon content ratio in the structure of component (A)]

Total carbon amount of component (B) in the surfactant composition (g) = [Amount of component (B)] × [Total carbon content ratio in the structure of component (B)]

Total carbon amount of the solvent components in the surfactant composition (g) = [Amount of the solvent components] × [Total carbon content ratio in the structure of the solvent components]

The sum of the total carbon amount (g) of component (A) in the surfactant composition, the total carbon amount (g) of component (B) in the surfactant composition, and the total carbon amount (g) of the solvent components in the surfactant composition, as determined above, was defined as the total carbon amount (g) in the surfactant composition.
The biomass content in the surfactant composition was calculated using the following formula.

[Formula 1]

Biomass content (%)

= [ $^{14}C$ carbon amount in the surfactant composition (g) / total carbon amount in the surfactant composition (g) ] × 100

Solubility

The appearance of a 0.1% by mass aqueous solution of the surfactant composition and the presence or absence of insoluble matter were visually evaluated.

A (Good): The aqueous solution was transparent, and no insoluble matter was observed.
B (Fair): The aqueous solution was cloudy, but no insoluble matter was observed.
C (Poor): Insoluble matter was partially observed.

Static Surface Tension

The static surface tension of a 0.1% by mass aqueous solution of the surfactant composition was measured at room temperature using a surface tensiometer (DY-500, manufactured by Kyowa Interface Science Co., Ltd.).

Dynamic Surface Tension

The dynamic surface tension at 1 Hz and 10 Hz of a 0.1% by mass aqueous solution of the surfactant composition was measured at room temperature using a bubble-pressure-type dynamic surface tensiometer (KRUSS BP-100, manufactured by KRUSS).

Foamability and Antifoaming Property

Twenty milliliters of a 0.1% by mass aqueous solution of the surfactant composition was placed in a 100 mL graduated cylinder, and the foaming height (foam volume in mL) was measured immediately after shaking for 1 minute using a shaker (IWAKI KM Shaker V-SX). The measured foaming height was used as an index of foamability.
Subsequently, the same sample used for the foamability measurement was allowed to stand for 5 minutes, and the foaming height (foam volume in mL) was measured. The measured foaming height was used as an index of antifoaming property.

Example 1

Fifty parts of (A) acetylene glycol shown in Table 1 below, heated to 60 °C, and 50 parts of (B) component B-1 shown in Table 1 below, heated to 60 °C, were mixed and stirred for 2 hours using a propeller stirrer. The mixture was then cooled to room temperature to obtain the surfactant composition of Example 1.

Examples 2 to 30, Comparative Examples 1 to 12, and Reference Examples 1 to 3

In the same manner as in Example 1, the surfactant compositions of Examples 2 to 30 were prepared according to the formulations shown in Table 1. In the same manner as in Example 1, the surfactant compositions of Comparative

Examples 1 to 12 were prepared according to the formulations shown in Table 2.

[Table 1]

| | | Example | | | | | | | | | | | | | | |
|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 |
| (A) | A-1 | 50 | 50 | 50 | 50 | 50 | 50 | 50 | 50 | 50 | 40 | 36 | 75 | 25 | | |
| | A-2 | | | | | | | | | | | | | | 15 | 15 |
| | A-3 | | | | | | | | | | | | | | | |
| (B) | B-1 | 50 | | | | | | | | | | | | | | |
| | B-2 | | 50 | | | | | | | | | | | | 50 | |
| | B-3 | | | 50 | | | | | | | | | | | | 50 |
| | B-4 | | | | 50 | | | | | | | | | | | |
| | B-5 | | | | | 50 | | | | | | | | | | |
| | B-6 | | | | | | 50 | | | | | | | | | |
| | B-7 | | | | | | | 50 | | | | | | | | |
| | B-8 | | | | | | | | 50 | | | | | | | |
| | B-9 | | | | | | | | | 50 | 60 | 54 | 25 | 75 | | |
| (C) Solvent | Dipropylene glycol | | | | | | | | | | | | | | 35 | 35 |
| | Propylene glycol | | | | | | | | | | | 5 | | | | |
| | Ion-exchanged water | | | | | | | | | | | 5 | | | | |
| Biomass content, (%) | | 49.9 | 49.2 | 48.9 | 48.5 | 48.7 | 49.1 | 49.6 | 49.4 | 49.3 | 59.3 | 56.4 | 24.5 | 74.4 | 51.9 | 51.5 |
| Solubility | | A | A | A | A | A | A | A | A | A | A | A | B | A | A | A |
| Static Surface Tension, [mN/m] | | 26.3 | 26.5 | 26.7 | 26.7 | 27.0 | 25.9 | 26.7 | 26.9 | 25.7 | 28.4 | 28.6 | 31.0 | 29.2 | 26.7 | 26.9 |
| Dynamic Surface Tension, [mN/m] | 1 Hz | 29.0 | 28.8 | 26.8 | 28.4 | 31.6 | 28.5 | 28.5 | 29.5 | 30.7 | 28.4 | 31.5 | 28.1 | 36.9 | 29.2 | 28.2 |
| | 10 Hz | 40.3 | 39.3 | 37.2 | 38.3 | 45.8 | 39.6 | 41.0 | 41.1 | 43.7 | 47.5 | 46.5 | 36.7 | 52.6 | 45.9 | 44.4 |
| (1) Foamability: Foam volume (mL) measured immediately after shaking for 1 minute. | | 31 | 34 | 32 | 33 | 13 | 25 | 15 | 15 | 20 | 22 | 20 | 5 | 22 | 27 | 29 |

(continued)

| | Example | | | | | | | | | | | | | | |
|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 |
| (2) Antifoaming property: (mL) Foam volume measured after standing for 5 minutes following the procedure of step (1) above. | 30 | 34 | 31 | 32 | 9 | 25 | 9 | 12 | 8 | 10 | 12 | 4 | 9 | 10 | 17 |

[Table 2]

| | | Example 16 | 17 | 18 | 19 | 20 | 21 | 22 | 23 | 24 | 25 | 26 | 27 | 28 | 29 | 30 |
|---|---|---|---|---|---|---|---|---|---|---|---|---|---|---|---|---|
| (A) | A-1 | | | | | | | | | | | | | | | |
| | A-2 | 15 | 15 | 15 | 22.5 | 7.5 | | | | | | | | | | |
| | A-3 | | | | | | 50 | 50 | 50 | 50 | 50 | 40 | 40 | 40 | 40 | 40 |
| (B) | B-1 | | | | | | | | | | | | | | | |
| | B-2 | | | | 25 | 75 | 50 | | | | | 60 | | | | |
| | B-3 | | | | | | | 50 | | | | | 60 | | | |
| | B-4 | 50 | | | | | | | 50 | | | | | 60 | | |
| | B-5 | | 50 | | | | | | | 50 | | | | | 60 | |
| | B-6 | | | | | | | | | | | | | | | |
| | B-7 | | | | | | | | | | | | | | | |
| | B-8 | | | | | | | | | | | | | | | |
| | B-9 | | | 50 | | | | | | | 50 | | | | | 60 |
| (C) Solvent | Dipropylene glycol | 35 | 35 | 35 | 52.5 | 17.5 | | | | | | | | | | |
| Biomass content, (%) | | 51.1 | 51.3 | 51.9 | 26.4 | 76.4 | 46.6 | 46.3 | 45.9 | 46.1 | 46.7 | 56.7 | 56.4 | 56.0 | 56.2 | 56.8 |
| Solubility | | A | A | A | B | A | A | A | A | A | A | A | A | A | A | A |
| Static Surface Tension, [mN/m] | | 27.1 | 30.0 | 30.4 | 25.9 | 29.2 | 29.4 | 29.8 | 30.0 | 33.0 | 34.5 | 29.6 | 30.4 | 30.2 | 33.7 | 35.3 |
| Dynamic Surface Tension, [mN/m] | 1 Hz | 28.1 | 37.6 | 36.6 | 28.5 | 34.3 | 31.5 | 32.0 | 32.4 | 36.2 | 36.0 | 31.3 | 33.0 | 33.2 | 38.5 | 38.3 |
| | 10 Hz | 44.7 | 54.0 | 53.1 | 46.0 | 49.8 | 37.2 | 37.6 | 38.3 | 40.5 | 39.7 | 38.8 | 40.1 | 40.0 | 44.4 | 43.6 |
| (1) Foamability: Foam volume (mL) measured immediately after shaking for 1 minute. | | 28 | 1 | 1 | 20 | 33 | 21 | 23 | 25 | 9 | 9 | 28 | 29 | 27 | 11 | 10 |
| (2) Antifoaming property: Foam volume (mL) measured after standing for 5 minutes following the procedure of step (1) above. | | 7 | 0 | 0 | 4 | 29 | 20 | 13 | 25 | 5 | 8 | 27 | 27 | 26 | 6 | 10 |

[Table 3]

| | | Comparative Example | | | | | | | | | | | | Reference Example | | |
|---|---|---|---|---|---|---|---|---|---|---|---|---|---|---|---|---|
| | | 1 | 2 | 3 | 4 | 5 | 6 | 7 | 8 | 9 | 10 | 11 | 12 | 1 | 2 | 3 |
| (A) | A-1 | 100 | | | | | | | | | | | | 40 | | |
| | A-2 | | 30 | | | | | | | | | | | | 12 | |
| | A-3 | | | 100 | | | | | | | | | | | | 40 |
| (B) | B-1 | | | | 100 | | | | | | | | | | | |
| | B-2 | | | | | 100 | | | | | | | | | | |
| | B-3 | | | | | | 100 | | | | | | | | | |
| | B-4 | | | | | | | 100 | | | | | | | | |
| | B-5 | | | | | | | | 100 | | | | | | | |
| | B-6 | | | | | | | | | 100 | | | | | | |
| | B-7 | | | | | | | | | | 100 | | | | | |
| | B-8 | | | | | | | | | | | 100 | | | | |
| | B-9 | | | | | | | | | | | | 100 | | | |
| Reference | C-1 | | | | | | | | | | | | | 60 | 60 | 60 |
| (C) Solvent | Dipropylene glycol | | 70 | | | | | | | | | | | | 28 | |
| Biomass content, (%) | | 0 | 0 | 0 | 100 | 100 | 100 | 100 | 100 | 100 | 100 | 100 | 100 | 0 | 0 | 0 |
| Solubility | | C | C | C | A | A | A | A | A | A | A | A | A | A | A | A |
| Static Surface Tension, [mN/m] | | 26.4 | 29.8 | 32.3 | 29.2 | 33.2 | 35.2 | 35.3 | 42.2 | 37.8 | 42.8 | 41.5 | 44.7 | 29.2 | 30.1 | 32.9 |
| Dynamic Surface Tension, [mN/m] | 1 Hz | 27.0 | 35.3 | 33.5 | 37.1 | 40.4 | 39.8 | 41.5 | 54.2 | 51.7 | 57.9 | 54.2 | 56.6 | 34.1 | 38.1 | 36.6 |
| | 10 Hz | 35.8 | 53.9 | 35.0 | 53.1 | 52.9 | 50.9 | 52.8 | 63.0 | 59.7 | 64.3 | 63.0 | 63.1 | 50.4 | 57.2 | 43.6 |
| (1) Foamability: Foam volume (mL) measured immediately after shaking for 1 minute. | | 5 | 0 | 0 | 34 | 34 | 32 | 31 | 26 | 20 | 18 | 19 | 11 | 20 | 20 | 13 |
| (2) Antifoaming property: Foam volume (mL) measured after standing for 5 minutes following the procedure of step (1) above. | | 3 | 0 | 0 | 34 | 33 | 30 | 31 | 25 | 19 | 18 | 18 | 11 | 11 | 4 | 11 |

As shown in a comparison of Tables 1 and 2 with Table 3, the biomass water-soluble surfactant composition of the present invention exhibits excellent antifoaming properties and dispersibility. Furthermore, because the composition has low static surface tension and low dynamic surface tension, it imparts excellent wettability and penetrability to inks, and the like. In addition, the composition has good water solubility and does not generate insoluble matter. In particular, since the dynamic surface tension of a 0.1% by mass aqueous solution at 1 Hz and 10 Hz is low, the composition is suitable for high-speed printing and high-speed coating.

Preparation of Blue Ink Composition

Coating Example 1

Fifteen parts of EMACOL SF BLUE H524F (water: 20 to 25%; copper phthalocyanine: 20 to 25%; manufactured by Sanyo Color Works, Ltd.) as a blue pigment dispersion, 85 parts of deionized water as an aqueous solvent, and 0.5 parts of the surfactant composition obtained in Example 1 were blended and stirred for 1 hour using a propeller stirrer to obtain a blue ink composition (hereinafter referred to as "Coating Example 1").

Coating Examples 2 to 5, Coating Comparative Examples 1 to 6, and Coating Reference Example 1

Blue ink compositions (hereinafter referred to as "Coating Examples 2 to 5") were obtained by repeating the procedures of Coating Example 1, except that the surfactant composition used in Coating Example 1 was replaced with the surfactant compositions obtained in Examples 10, 11, 14, or 26.

Blue ink compositions for comparison (hereinafter referred to as "Coating Comparative Examples 1 to 6") were obtained by repeating the procedures of Coating Example 1, except that the surfactant composition used in Coating Example 1 was replaced with the surfactant compositions obtained in Comparative Examples 1 to 5 or 12.

In addition, a blue ink composition for reference (hereinafter referred to as "Coating Reference Example 1") was obtained by repeating the procedures of Coating Example 1, except that the surfactant composition used in Coating Example 1 was replaced with the surfactant composition obtained in Reference Example 1.

The properties of the blue ink compositions were measured and evaluated according to the methods described below. The results are shown in Table 4.

Evaluation of Blue Ink Compositions

Solubility

The appearance of the blue ink compositions and the presence or absence of insoluble matter were visually evaluated.

A (Good): Solubility was good and no insoluble matter was observed.
C (Poor): Insoluble matter, such as partial oil floating, was observed.

Coatability

The blue ink composition was applied to a coated paper (paper coated with OK Topcoat manufactured by Oji Paper Co., Ltd., supplied by Nippon Testpanel Co., Ltd.) using a bar coater RDS07 (coating thickness: approximately 16.0 μm), and the coated surface was visually evaluated for cissing and other defects.

AA (Excellent): No cissing, color unevenness, or pinholes were observed.
A (Good): Substantially no cissing, color unevenness, or pinholes were observed.
B (Fair): Some cissing, color unevenness, or pinholes were observed.
C (Poor): Significant cissing, color unevenness, or pinholes were observed.

[Table 4]

| Component, mass % | | Coating Example | | | | | Coating Comparative Example | | | | | | Coating Reference Example |
|---|---|---|---|---|---|---|---|---|---|---|---|---|---|
| | | 1 | 2 | 3 | 4 | 5 | 1 | 2 | 3 | 4 | 5 | 6 | 1 |
| Surfactant Composition | Example 1 | 0.5 | | | | | | | | | | | |
| | Example 10 | | 0.5 | | | | | | | | | | |
| | Example 11 | | | 0.5 | | | | | | | | | |
| | Example 14 | | | | 0.5 | | | | | | | | |
| | Example 26 | | | | | 0.5 | | | | | | | |
| | Comparative Example 1 | | | | | | 0.5 | | | | | | |
| | Comparative Example 2 | | | | | | | 0.5 | | | | | |
| | Comparative Example 3 | | | | | | | | 0.5 | | | | |
| | Comparative Example 4 | | | | | | | | | 0.5 | | | |
| | Comparative Example 5 | | | | | | | | | | 0.5 | | |
| | Comparative Example 12 | | | | | | | | | | | 0.5 | |
| | Reference Example 1 | | | | | | | | | | | | 0.5 |
| Blue pigment dispersion | | 15 | 15 | 15 | 15 | 15 | 15 | 15 | 15 | 15 | 15 | 15 | 15 |
| Pure water | | 85 | 85 | 85 | 85 | 85 | 85 | 85 | 85 | 85 | 85 | 85 | 85 |
| Evaluation | Ink Solubility | A | A | A | A | A | A | C | C | A | A | A | A |
| | Coatability | A | AA | AA | AA | A | C | C | C | B | B | B | A |

The biomass water-soluble surfactant composition of the present invention exhibits excellent water solubility. In addition, the composition has excellent antifoaming properties and dispersibility, and, owing to its low dynamic surface tension, imparts excellent wettability and penetrability to inks, paper coating agents, and the like, thereby providing excellent coatability. Furthermore, the surfactant composition of the present invention is compatible with environmental considerations and is useful as a surfactant for inks, paper coating agents, and the like.

## Claims

**1.** A water-soluble surfactant composition comprising (A) an acetylene glycol represented by the following formula (1):

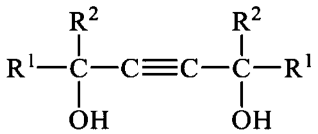

(1)

wherein $R^1$ and $R^2$ each represent an alkyl group having 1 to 5 carbon atoms,
and/or an acetylene glycol ethoxylate represented by the following formula (2):

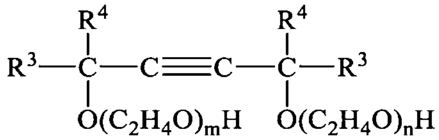

(2)

wherein $R^3$ and $R^4$ each represent an alkyl group having 1 to 5 carbon atoms, m and n each are a positive number of 0.5 to 25, and the sum of m and n is 1 to 40,

and (B) a polyoxyalkylene adduct-type nonionic surfactant containing at least one bio-derived polyoxyalkylene adduct-type nonionic surfactant,

wherein the water-soluble surfactant composition has a biomass content of 10% or more as determined in accordance with ASTM D6866-22.

**2.** The water-soluble surfactant composition according to claim 1, wherein the polyoxyalkylene adduct-type nonionic surfactant is a polyoxyalkylene addition polymer of a compound selected from the group consisting of aliphatic alcohols, unsaturated fatty acids, saturated fatty acids, fatty acid esters, sorbitan fatty acid esters, and glycerin fatty acid esters, each having 6 to 60 carbon atoms, and has an oxyalkylene addition molar amount of 1 to 60 mol.

**3.** The water-soluble surfactant composition according to claim 1, wherein component (B) is represented by the following formula (3):

$$R^5O(C_2H_4O)_x(C_3H_6O)_yH \qquad (3)$$

wherein $R^5$ is a linear, cyclic, or branched saturated or unsaturated hydrocarbon group having 6 to 60 carbon atoms and optionally containing a heteroatom, x is a positive number of 1 to 60, y is 0 or a positive number of 1 to 60, and the oxyalkylene units represented in parentheses for x and y may be randomly bonded or have a block structure.

**4.** The water-soluble surfactant composition according to claim 1, wherein the amount of component (A) is 5 to 80% by mass based on the total mass of the composition, and the amount of component (B) is 20 to 95% by mass based on the total mass of the composition.

**5.** The water-soluble surfactant composition according to claim 1, wherein component (B) has a HLB of 10 to 18.

**6.** The water-soluble surfactant composition according to claim 1, wherein component (B) has a HLB of 12 to 16.

**7.** The water-soluble surfactant composition according to claim 1, wherein component (B) has a biomass content of 10% to 100% as determined in accordance with ASTM D6866-22.

**8.** The water-soluble surfactant composition according to claim 3, wherein in said formula (3), $R^5$ is a linear, cyclic, or branched saturated or unsaturated hydrocarbon group having 6 to 60 carbon atoms and optionally containing a heteroatom, x is a positive number of 1 to 60, and y is 0.

**9.** The water-soluble surfactant composition according to claim 3, wherein in said formula (3), $R^5$ is a linear, cyclic, or branched saturated or unsaturated hydrocarbon group having 30 to 60 carbon atoms and optionally containing a heteroatom, x is a positive number of 30 to 60, and y is 0.

**10.** The water-soluble surfactant composition according to claim 3, wherein in said formula (3), $R^5$ is a group selected from the group consisting of an aliphatic hydrocarbon group, an alicyclic hydrocarbon group, an aromatic hydrocarbon group, an unsaturated fatty acid residue, a saturated fatty acid residue, a fatty acid ester residue, a sorbitan fatty acid ester residue, and a glycerin fatty acid ester residue, each having 6 to 60 carbon atoms.

**11.** The water-soluble surfactant composition according to claim 1, further comprising (C) a water-soluble organic solvent.

**12.** The water-soluble surfactant composition according to claim 1, wherein an aqueous solution containing 0.1% by mass of the water-soluble surfactant composition has a dynamic surface tension of 60 mN/m or less at each of 1 Hz and 10 Hz at room temperature.

**13.** A paper coating agent comprising the water-soluble surfactant composition according to any one of claims 1 to 12.

**14.** The paper coating agent according to claim 13, wherein the amount of the water-soluble surfactant composition is 0.05 to 10% by mass, based on the total amount of the paper coating agent.

**15.** An ink comprising the water-soluble surfactant composition according to any one of claims 1 to 12.

**16.** The ink according to claim 15, wherein the amount of the water-soluble surfactant composition is 0.05 to 10% by mass, based on the total amount of the ink.

## INTERNATIONAL SEARCH REPORT

International application No.
**PCT/JP2024/029303**

**A. CLASSIFICATION OF SUBJECT MATTER**

***C09K 23/38***(2022.01)i; ***C09D 7/63***(2018.01)i; ***C09D 11/02***(2014.01)i; ***C09D 201/00***(2006.01)i; ***C09K 23/42***(2022.01)i; ***D21H 19/20***(2006.01)i
FI: C09K23/38; C09K23/42; C09D201/00; C09D7/63; C09D11/02; D21H19/20 Z

According to International Patent Classification (IPC) or to both national classification and IPC

**B. FIELDS SEARCHED**

Minimum documentation searched (classification system followed by classification symbols)

C09K23/38; C09D7/63; C09D11/02; C09D201/00; C09K23/42; D21H19/20

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII)

**C. DOCUMENTS CONSIDERED TO BE RELEVANT**

| Category* | Citation of document, with indication, where appropriate, of the relevant passages | Relevant to claim No. |
|---|---|---|
| X | JP 2003-113397 A (NISSHIN CHEM IND CO., LTD.) 18 April 2003 (2003-04-18) claims, paragraphs [0032]-[0050], examples 1, 6-7, comparative examples 2-3, 5, 9, etc. | 1-16 |
| X | JP 2002-348500 A (NISSHIN CHEM IND CO., LTD.) 04 December 2002 (2002-12-04) claims, paragraphs [0029]-[0045], examples 1, 3-4, comparative examples 1-3, etc. | 1-16 |
| X | JP 2003-253599 A (NISSHIN CHEM IND CO., LTD.) 10 September 2003 (2003-09-10) claims, paragraphs [0026]-[0042], examples 1-5, comparative examples 1, 3, etc. | 1-16 |
| A | WO 2013/146950 A1 (DAIKIN INDUSTRIES, LTD.) 03 October 2013 (2013-10-03) paragraph [0029] | 1-16 |
| A | JP 2004-91686 A (DAI ICHI KOGYO SEIYAKU CO., LTD.) 25 March 2004 (2004-03-25) paragraph [0041] | 1-16 |
| A | JP 2008-150561 A (DAI ICHI KOGYO SEIYAKU CO., LTD.) 03 July 2008 (2008-07-03) paragraph [0024] | 1-16 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **18 October 2024** | **29 October 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2024/029303**

**C. DOCUMENTS CONSIDERED TO BE RELEVANT**

| Category* | Citation of document, with indication, where appropriate, of the relevant passages | Relevant to claim No. |
|---|---|---|
| A | JP 2014-108417 A (NISSHIN CHEM IND CO., LTD.) 12 June 2014 (2014-06-12) claims, examples | 1-16 |

Form PCT/ISA/210 (second sheet) (July 2022)

**INTERNATIONAL SEARCH REPORT**
**Information on patent family members**

International application No.
**PCT/JP2024/029303**

| Patent document cited in search report | Publication date (day/month/year) | Patent family member(s) | Publication date (day/month/year) |
|---|---|---|---|
| JP 2003-113397 A | 18 April 2003 | (Family: none) | |
| JP 2002-348500 A | 04 December 2002 | (Family: none) | |
| JP 2003-253599 A | 10 September 2003 | (Family: none) | |
| WO 2013/146950 A1 | 03 October 2013 | US 2015/0329701 A1<br>paragraph [0037]<br>EP 2826550 A1<br>CN 104203386 A | |
| JP 2004-91686 A | 25 March 2004 | (Family: none) | |
| JP 2008-150561 A | 03 July 2008 | (Family: none) | |
| JP 2014-108417 A | 12 June 2014 | US 2014/0150690 A1<br>claims, examples<br>EP 2740841 A1<br>CN 103846048 A<br>KR 10-2014-0072806 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002348500 A
- JP 2003253599 A